# EUROPEAN PATENT APPLICATION

(11) **EP 2 924 622 A1**
(43) Date of publication of application: **30.09.2015**
(21) Application number: 14161962.7
(22) Date of filing: 27.03.2014
(51) Int. Cl.: G06Q 10/06, G06Q 30/02, G06Q 50/30

(54) **Method of establishing a data connection and path computation element**

(71) Applicant: Nokia Solutions and Networks GmbH & Co. KG, 81541 Munich (DE)
(72) Inventor: Hoffmann, Klaus, 80995 Munich (DE)

(57) **Abstract**

It is described a method of establishing a data connection in a network (1), wherein a requesting entity (2) requests a data connection, which provides a particular quality of service, and wherein a path computation element (51, 52) of the network (1) reports the ability to provide the requested data connection via a particular data path (71, 72) to the requesting entity (2). In addition, the path computation element (51, 52) also reports the estimated costs/charging information for providing said data connection to the requesting entity (2), and the data connection is only established on acceptance of the requesting entity (2). Furthermore, a path computation element (51, 52) and a network (1) allowing the presented method to be executed are disclosed.

## Description

### Field of invention

The present invention relates to a method of establishing a data connection in a network, wherein a requesting entity requests a data connection, which provides a particular quality of service, and wherein a path computation element of the network reports the ability to provide the requested data connection via a particular data path to the requesting entity. The present invention also relates to a path computation element, comprising means for receiving a request from a requesting entity requesting a data connection, which provides a particular quality of service, means for calculating a data path through the network for the requested data connection and means for reporting the ability to provide a data connection, which provides the requested quality of service, to the requesting entity. Finally, the present invention relates to a data network, comprising one or more path computation elements as disclosed above.

### Art Background

A method, a path computation element and a network of the kind above are known in prior art in principle. Quite often - depending on the size of a network, there is a number of possible paths for a data connection between a requesting entity/party and a target entity/party. Usually, a number of possible paths are calculated and in the end the "best" path is used for switching the data communication. Often, the path is chosen based on technical criteria. For example, network paths, whose load is already comparably high, are spared, and a path with a comparably low load can be used instead. For example, US 7,995,593 B2 discloses a system and a method for calculating paths through a network.

However, this approach can lead to undesired consequences if a path is chosen, which in fact is advantageous with respect to technical considerations, but is disadvantageous in regard of economical considerations. For example, the chosen path can lead through a network of a provider, with which the requesting entity has just a bad contract with high charging rates.

Accordingly, there may be a need for an improved method of establishing a data connection in a network, an improved path computation element and an improved network. In particular, the selection of the "best" data path shall be based on a more meaningful decision basis.

### Summary of the Invention

This need may be met by the subject matter according to the independent claims. Advantageous embodiments of the present invention are described by the dependent claims.

According to a first aspect of the invention there is provided a method as disclosed in the opening paragraph,
- wherein the path computation element also reports the estimated costs/charging information for providing said data connection to the requesting entity/party and
- wherein the data connection is established on acceptance of the requesting entity/party.

According to a further aspect of the invention there is provided a path computation element as disclosed in the opening paragraph, wherein the path computation element also comprises means for reporting the estimated costs for providing said data connection to the requesting entity. According to yet another aspect of the invention there is provided a data network, comprising one or more path computation elements as defined above.

Based on the measures disclosed above, the requesting entity can accept a particular offer (e.g. the cheapest or the one with the best cost-performance ratio) or refuse from requesting the data connection if no offer is within the expected limit. The data connection is (only) established on acceptance of the requesting entity.

Each offerer (path computation element) can calculate the corresponding network/resources as required and additionally can also calculate the financial cost for the resources being utilized by the requesting entity. Especially it is possible that the offerer calculates the costs (also) based on the identity of the requestor (i.e. based on a agreement between them).

It should be noted at this point that "data connection" has a general meaning in the context of the invention. Hence "data" may be audio data, text data, video data, picture data and/or machine data (e.g. program code, parameters, etc.) for use by computers.

According to a further aspect of the invention, the requested data connection is provided/established via a path tree and/or an overlay network. The disclosed method may be used for computation simple paths between two parties (point to point connection, P2P for short), path trees between a single party and a plurality of parties (point to multipoint connection, P2MP for short) and/or overlay networks between a plurality of parties (multipoint to multipoint connection, MP2MP for short). A path tree and an overlay network can also be seen as a crowd of single paths. In case of a path tree all paths start (respectively end) at one point, in case of an overlay network they crisscross.

An "overlay network" or virtual network generally is a network which is built on the top of another network. Nodes in the overlay can be considered as being connected by virtual or logical links respectively paths. Each path may correspond to a number of physical links in the underlying network. The underlying physical network itself may consist of connected subnetworks, which in particular are operated by different operators or providers.

It should be noted that the term "path computation element" does not limit the computation entity to the computation of a path. A "path computation element" may also calculate trees and overlay networks.

It should also be noted that the invention is not limited to a single path, a single tree or a single overlay network to be computed. By contrast, also a plurality of paths, trees and/or overlay networks may be computed by a path computation element.

Furthermore, it should be noted that the requesting entity is not necessarily part of the requested data connection. The requesting entity may also request the data connection on behalf of the communication partners.

According to a further aspect of the invention there is provided a method, wherein a plurality of path computation elements are offering/reporting the ability to provide the requested data connection via particular data paths. In this way competition between different providers can be improved.

According to a further embodiment of the invention, the estimated costs/charging information comprises one or more of the parameters currency/connection, currency/time, currency/amount of data and/or currency/CPU cycles (e.g. EUR/sec, USD/MB etc.). That means, the estimated costs/charging information comprises one or more of the parameters amount of money/connection, amount of money/time and/or amount of money/amount of data. In this way, the requesting entity has a meaningful basis of comparison and a meaningful basis for choosing the best offer.

According to yet another embodiment of the invention, the requested quality of service comprises one or more of the parameters delay, jitter, CPU cycle, storage and/or bandwidth. Accordingly, the requesting entity can place a meaningful request.

In another preferred embodiment, the path computation element reports costs for calculating the data path for the requested data connection to the requesting entity. Said costs may be reported before the path calculation, so that the requesting entity can agree to the offer or not, or the costs are reported after path calculation, and the requesting entity is charged anyway. In this way, a requesting entity is charged for the offer as such, which is particularly beneficial if the path calculation is comparably difficult respectively cumbersome.

In a further preferred embodiment, the requesting entity provides an upper limit of costs to the path computation element and the data connection is automatically established if the estimated costs are below said upper limit. In this way, the communication between the requesting entity and the path computation elements can be simplified/optimized/minimized.

In another embodiment, the estimated costs/charging information is reported to the requesting entity in encrypted form, in particular by means of keys of an asymmetric encryption method. Accordingly, the charging information is kept secret when travelling through the network, and an competitor cannot get knowledge about a particular offer. For example, the PGP (Pretty Good Privacy) encryption method may be used for the concerns above.

In yet another embodiment, the path computation element and the requesting entity are authenticated, in particular by means of keys of an asymmetric encryption method. In this way the requested entity can trust the identity of an offering path computation element and vice versa. For example, the PGP (Pretty Good Privacy) encryption method may be used for the concerns above.

In an embodiment of the invention, a public key of the requesting entity is inserted in the request for a data connection and/or in the acceptance of a data connection. In a similar embodiment of the invention, a public key of the path computation element is inserted in the offer for a data connection. In this way, a public key needed for encryption can be communicated to the path computation element and/or requesting entity.

In a beneficial variant of the presented method, the path computation element encrypts the charging information by means of the public key of the requesting entity, and the requesting entity decrypts the charging information, which was received from the path computation element, by means of its private key. Accordingly, the charging information can be kept secret when travelling even through several networks.

In a further beneficial variant of the presented method, the requesting entity encrypts the charging information, which was received from the path computation element, by means of the public key of the path computation element and sends it to the path computation element /a resource reservation protocol node (RSVP node) on acceptance of a data connection. Accordingly, the charging information again can be kept secret when travelling through the network. A "resource reservation protocol node" in the context of the invention is an entity, which switches a data connection in a network. It can be a separate entity or integrated into the path computation element, which then itself has the capability to switch a data connection.

In yet another beneficial variant of the presented method, on receipt of the acceptance message the path computation element / resource reservation protocol node (RSVP node) decrypts the charging information received from the requesting entity by means of its private key, compares the received charging information with the originally sent charging information and reports a result of the comparison to the requesting entity. In this way, the requesting entity can be sure that the accepted data connection is the same as the offered data connection. Accordingly, the data connection cannot be more expensive than offered. If the result of the comparison is negative, the path computation element can also reject the path request, as it would not be able to charge the correct entity for the resource allocation. In other words, the requesting entity and the path computation element are authenticated.

Advantageously, the "Path Computation Element Protocol" is used for communication between the requesting entity and the path computation element. In particular, the "PcRequest" message of the "Path Computation Element Protocol" is used for requesting the data connection/tree/network and the "PcReply" message of the "Path Computation Element Protocol" is used for reporting the estimated costs. Moreover, establishing the data connection may initiated by a "Path message" of the "Resource Reservation Protocol" sent by the requesting entity. Accordingly, the invention may be implemented with just low effort as existing protocols are used respectively extended.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an exemplary data network and
Figure 2 shows an exemplary message flow between a requesting entity and a path computation element.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

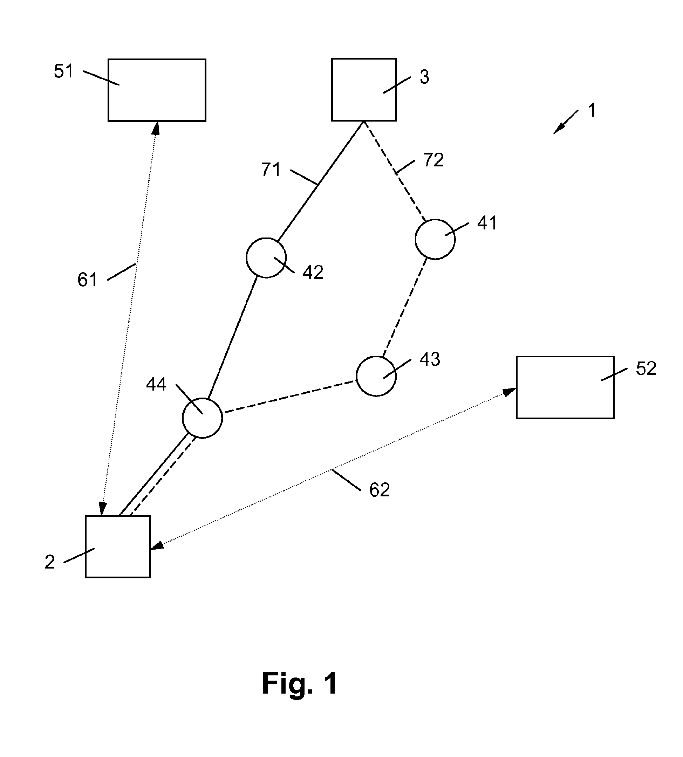

Figure 1 shows an exemplary data network 1, comprising a requesting entity 2 (e.g. a Path Computation Client, PCC for short), a target entity 3, network nodes 41..44 and two path computation elements 51, 52 (PCE for short).

The path computation elements 51, 52, comprise means for receiving a request from the requesting entity 2 requesting a data connection (e.g. for voice, video, text, etc), which provides a particular quality of service, means for calculating a data path 71, 72 through the network 1 for the requested data connection and means for reporting the ability to provide a data connection, which provides the requested quality of service, to the requesting entity 2.

In a first step of the method for establishing a data connection through the network 1, the requesting entity 2 requests a data connection, which provides a particular quality of service. In succession, the first path computation element 51 of the network 1 may report the ability to provide the requested data connection via a first data path 71 to the requesting entity 2. The connection 61 between the requesting entity 2 and the first path computation element 51 is shown by a dotted line in Fig. 1. The first data path 71 is shown by a solid line.

In addition to the reporting of the ability to provide the requested data connection, the first path computation element 51 also reports the estimated costs/charging information for providing said data connection to the requesting entity 2. Accordingly, the first path computation element 51 also comprises means for reporting the estimated costs for providing said data connection to the requesting entity 2. If the requesting entity 2 agrees to said costs, it sends an acceptance message to the first path computation element 51, and the data connection via path 71 is established on acceptance of the requesting entity 2.

In the above example it was assumed that the first path computation element 51 is able to provide the requested data connection. However, this is not a necessary consequence. It is also possible that the first path computation element 51 is not able to provide the requested data connection. In this case it may report the inability to the requesting entity 2. It is also possible that no particular message is sent to the requesting entity 2 in this case.

In the above example it was furthermore assumed that the requesting entity 2 accepts the offer from the first path computation element 51. However, it is also possible that it does not accept it. In this case it may send a refusal information to the first path computation element 51. It is also possible that no particular message is sent to the first path computation element 51 in this case.

In the example shown in Fig. 1 a plurality of path computation elements 51, 52 are placing offers. Concretely, the requesting entity 2 requests a data connection, which provides a particular quality of service, also from a second path computation element 52. As a consequence, the second path computation element 52 of the network 1 may report the ability to provide the requested data connection via a second data path 72 to the requesting entity 2. The connection 62 between the requesting entity 2 and the second path computation element 52 is shown by a dotted line in Fig. 1. The second data path 72 is shown by a dashed line.

In addition to the reporting of the ability to provide the requested data connection, the second path computation element 52 also reports the estimated costs/charging information for providing said data connection to the requesting entity 2. If the requesting entity 2 agrees to said costs, it triggers to send or sends an acceptance message to the second path computation element 52, and the data connection is established via path 72 on acceptance of the requesting entity 2. Accordingly, the requesting entity 2 may choose the cheapest data connection. However, it may also choose the more expensive connection, if for example it provides a better quality of service or is provided by a preferred provider.

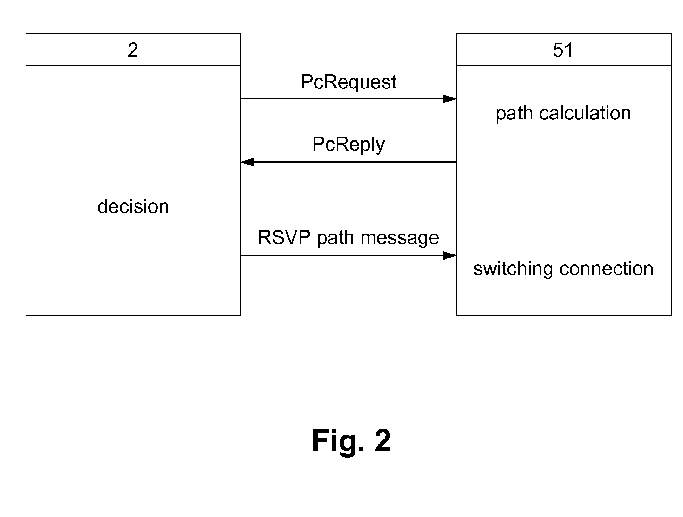

In Fig. 1 the second path computation element 52 is understood to be able to switch the requested data connection. However, this is no necessary condition. The data connection may also be established by a separate entity, e.g. a RSVP node (see also Fig. 2). In this case, the acceptance message can be sent to the RSVP node which in turn may consult the second path computation element 52.

In Fig. 1 just two path computation elements 51, 52 are shown. However, one skilled in the art will easily perceive that the shown principle also applies to more than two path computation elements 51, 52. Furthermore, one will easily perceive that the shown principle also applies to the computation of path trees and overlay networks. In this context, a "path" can be seen as a sub connection of a path tree and/or an overlay network. Accordingly, nevertheless Fig. 1 is shown with respect to a P2P connection, it equally applies to P2MP connections and MP2MP connections.

It should also be noted that the requesting entity is not necessarily part of the requested data connection. The requesting entity may also request the data connection on behalf of the communication partners. For instance a Virtual network Operator (VNO) may request an overlay network via a Virtual Network Provider (VNP) in order to connect its subscribers to the overlay network, or the VNO may request to connect its Virtual Machines (VM) to the overlay network.

Furthermore, it should be noted that nevertheless Fig. 1 shows just a single network 1, the network 1 may consist of several (interconnected) physical networks offered by different Physical Infrastructure Providers (PIPs). These sub networks are combined to network 1, on which the VNO can request a virtual network / overlay network to be established.

Generally, the requested quality of service can comprise one or more of the parameters delay, jitter, CPU cycle, storage and/or bandwidth. The estimated costs/charging information may comprise one or more of the parameters currency/connection, currency/time and/or currency/amount of data. In this way, the requesting entity 2 has a meaningful basis of comparison.

In a preferred embodiment, the path computation elements 51, 52 may report costs for calculating the data path 71, 72 for the requested data connection to the requesting entity 2. That means that the path calculation as such is charged, and the costs for calculation are reported to the requesting entity 2. Said costs may be reported before path calculation, so that the requesting entity can agree to the offer or not, or the costs are reported after path calculation, and the requesting entity 2 is charged anyway.

In a further preferred embodiment, the requesting entity 2 provides an upper limit of costs to the path computation element 51, 52, and the data connection is automatically established if the estimated costs are below said upper limit. In this way, the communication between the requesting entity 2 and the path computation elements 51, 52 can be simplified. This embodiment is particularly useful if the requesting entity°2 keeps busy just one path computation element 51, 52 in one point of time, i.e. if the requesting entity 2 does not send multiple requests parallel to a plurality of path computation elements 51, 52.

Fig. 2 now shows an exemplary message flow between the requesting entity 2 and the first path computation element 51, i.e. an exemplary communication over connection 61. However, Fig. 2 is not limited to the first path computation element 51, but the requesting entity 2 and the second path computation element 52 may communicate in the same or a similar way.

By way of example, the "Path Computation Element Protocol" is used for communication between the requesting entity 2 and the first path computation element 51. Concretely, the "PcRequest" message of the "Path Computation Element Protocol" is used for requesting the data connection and the "PcReply" message of the "Path Computation Element Protocol" is used for reporting the estimated costs. Establishing the data connection is initiated by a "Path message" of the "Resource Reservation Protocol".

In a first step, the PcRequest message is sent from the requesting entity 2 to the first path computation element 51. The PcRequest message comprises the requested quality of service. In succession, the first path computation element 51 calculates a data path 71 for the requested data connection. If it is able to provide the connection, it reports its ability back to the requesting entity 2, along with the estimated costs, by means of the PcReply message. If the requesting entity 2 decides to accept the offer from the first path computation element 51, it sends a RSVP path message.

Generally, it is of advantage if the estimated costs/charging information is reported to the requesting entity 2 in encrypted form. That means the PcReply message comprises encrypted charging information. For this reason, the first path computation element 51 encrypts the charging information by means of a public key of an asymmetric encryption method associated with the requesting entity 2. The public key of the requesting entity 2 may be inserted in the PcRequest message. It may also communicated to the first path computation element 51 in another way.

In succession, the requesting entity 2 decrypts the charging information, which was received from the first path computation element 51, by means of its private key. Then the requesting entity 2 decides whether to accept the offer. In this example, the requesting entity 2 accepts the offer.

For this reason the requesting entity 2 preferably encrypts the charging information, which was received from the first path computation element 51, by means of a public key of an asymmetric encryption method associated with the first path computation element 51 and sends it to a RSVP Node associated with the first path computation element 51. That means the RSVP path message also comprises encrypted charging information. The public key of the first path computation element 51 may be inserted in the PcReply message or communicated to the requesting entity 2 in another way.

On receipt of the RSVP path message the RSVP Node associated with the first path computation element 51 decrypts the charging information received from the requesting entity 2 by means of its private key, compares the received charging information with the originally sent charging information and reports a result of the comparison to the requesting entity 2. For instance, in case the comparison was successful (equal), it responds with the Resv message of the RSVP protocol confirming the establishment of the data connection/tree/network and switches the data connection if the received charging information is the same as the originally sent charging information. Alternatively a PathErr can be issued in case of a failure.

Figure 2 depicts a case where the path computation element 51 and a RSVP node are integrated into one single entity.

However, from current known technology state the path computation element 51 can also be separated from the RSVP node. In such a case the RSVP path message can be sent to the separated RSVP node, which then establishes the requested connection. However, the path computation element 51 may also forward a RSVP path message coming from the requesting entity 2 to the RSVP node. If a RSVP message containing encrypted charging information is directly sent to the RSVP node, the RSVP node may extract the information from the path message and send it to the (separated) path computation element 51 for comparison. Alternatively or in addition the comparison may also take place in the RSVP node if it gets (encrypted) charging information from the path computation element 51.

The measures, which were taken above, provide a number of advantages:
- The estimated costs/charging information cannot be tampered with.
- The first path computation element 51 and the requesting entity 2 are authenticated, here by means of keys of an asymmetric encryption method, for example of PGP (Pretty Good Privacy).
- The requesting entity 2 can be sure that the accepted data connection is the same as the offered data connection. Accordingly, the data connection cannot be more expensive than offered.
- The path computation element 51 can be sure that switching the data connection indeed is charged to the requesting entity 2 and not to another party.

The format of the identity object for the requesting entity 2 (PCC identity object body) for example can look like as follows:

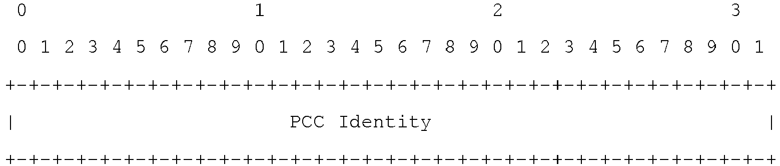

The PCC identity may contain the AS (Autonomous System)as defined in RFC5668 (4-Octet AS Specific BGP (Border gateway Protocol) Extended Community) This may also be the public key (PGP) of the originator/requestor.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state that an offer for a data connection comprises estimated costs/charging information. Accordingly, the requesting entity can accept a particular offer (e.g. the cheapest) or refuse from requesting the data connection if no offer is within the expected limit. The data connection is established (only) on acceptance of the requesting entity 2.

It should be noted that the invention beneficially is used for reporting (confidential) charging information. However, the invention can easily used also for other kinds of confidential information.

### List of reference signs:

- 1: data network
- 2: requesting entity
- 3: target entity
- 41..44: network nodes
- 51, 52: path computation elements
- 61, 62: connection to path computation element
- 71, 72: data path

## Claims

1. Method of establishing a data connection in a network (1), wherein a requesting entity (2) requests a data connection, which provides a particular quality of service, and wherein a path computation element (51, 52) of the network (1) reports the ability to provide the requested data connection via a particular data path (71, 72) to the requesting entity (2),
- wherein the path computation element (51, 52) also reports the estimated costs/charging information for providing said data connection to the requesting entity (2) and
- wherein the data connection is established on acceptance of the requesting entity (2).

2. Method as set forth in claim 1, wherein the requested data connection is provided/established via a path tree and/or an overlay network.

3. Method as set forth in claim 1 or 2, wherein a plurality of path computation elements (51, 52) are offering/reporting the ability to provide the requested data connection via particular data paths (71, 72).

4. Method as set forth in any one of the preceding claims, wherein the estimated costs/charging information comprises one or more of the parameters currency/connection, currency/time, currency/amount of data and/or currency/CPU cycles.

5. Method as set forth in any one of the preceding claims, wherein the requested quality of service comprises one or more of the parameters delay, jitter, CPU cycle, storage and/or bandwidth.

6. Method as set forth in any one of the preceding claims, wherein the path computation element (51, 52) reports costs for calculating the data path (71, 72) for the requested data connection to the requesting entity (2).

7. Method as set forth in any one of the preceding claims, wherein the requesting entity (2) provides an upper limit of costs to the path computation element (51, 52), and the data connection is automatically established if the estimated costs are below said upper limit.

8. Method as set forth in any one of the preceding claims, wherein the estimated costs/charging information is reported to the requesting entity (2) in encrypted form.

9. Method as set forth in any one of the preceding claims, wherein the path computation element (51, 52) and the requesting entity (2) are authenticated.

10. Method as set forth in claim 8 or 9, wherein encryption/authentication between the path computation element (51, 52) and the requesting entity (2) is done by means of keys of an asymmetric encryption method.

11. Method as set forth in claim 10, wherein a public key of the requesting entity (2) is inserted in the request for a data connection and/or in the acceptance of a data connection.

12. Method as set forth in claim 10 or 11, wherein a public key of the path computation element (51, 52) is inserted in the offer for a data connection.

13. Method as set forth claim 12, wherein the path computation element (51, 52) encrypts the charging information by means of the public key of the requesting entity (2) and the requesting entity (2) decrypts the charging information, which was received from the path computation element (51, 52), by means of its private key.

14. Method as set forth in any one of the claims 11 to 13, wherein the requesting entity (2) encrypts the charging information, which was received from the path computation element (51, 52), by means of the public key of the path computation element (51, 52) and sends it to the path computation element (51, 52) / a resource reservation protocol node on acceptance of a data connection.

15. Method as set forth in claim 14, wherein on receipt of the acceptance message the path computation element (51, 52) / resource reservation protocol node decrypts the charging information received from the requesting entity (2) by means of its private key, compares the received charging information with the originally sent charging information and reports a result of the comparison to the requesting entity (2).

16. Method as set forth in any one of the preceding claims, wherein the "Path Computation Element Protocol" is used for communication between the requesting entity (2) and the path computation element (51, 52).

17. Method as set forth in claim 16, wherein the "PcRequest" message of the "Path Computation Element Protocol" is used for requesting the data connection and the "PcReply" message of the "Path Computation Element Protocol" is used for reporting the estimated costs.

18. Method as set forth in claim 16 or 17, wherein establishing the data connection is initiated by a "Path message" of the "Resource Reservation Protocol" sent by the requesting entity (2).

19. Path computation element (51, 52), comprising
- means for receiving a request from a requesting entity (2) requesting a data connection, which provides a particular quality of service,
- means for calculating a data path (71, 72) through the network (1) for the requested data connection and
- means for reporting the ability to provide a data connection, which provides the requested quality of service, to the requesting entity (2),
wherein
the path computation element (51, 52) also comprises means for reporting the estimated costs for providing said data connection to the requesting entity (2).

20. Data network (1), comprising one or more path computation elements (51, 52) as set forth in claim 19.
